# EUROPEAN PATENT SPECIFICATION

(11) **EP 3 643 466 B1**
(45) Date of publication and mention of the grant of the patent: **14.02.2024**
(21) Application number: 19202185.5
(22) Date of filing: 09.10.2019
(51) Int. Cl.: B27C 5/06, B23Q 1/03, B23Q 16/00

(54) **MACHINE TOOL FOR MACHINING PANELS AND METHOD**
WERKZEUGMASCHINE FÜR DIE BEARBEITUNG VON PLATTEN UND VERFAHREN
OUTIL POUR L'USINAGE DE PANNEAUX ET MÉTHODE

(30) Priority: 22.10.2018 IT 201800009670
(43) Date of publication of application: 29.04.2020
(73) Proprietor: SCM Group S.p.A., 47921 Rimini (RN) (IT)
(72) Inventor: BASSI, Enrico, 47921 RIMINI (IT); VAGNONI, Paolo, 47921 RIMINI (IT)
(74) Representative: Tiburzi, Andrea

(56) References cited:
- EP-A1- 0 712 684
- EP-A2- 2 165 811
- WO-A1-2016/046474
- WO-A1-2016/094981
- DE-A1-102017 128 207
- DE-U1-202015 102 943
- IT-A1- FI20 090 269
- JP-U- S62 128 016
- KR-B1- 102 058 003

## Description

This invention relates to a machine tool for machining panels, according to the preamble of claim 1. Such a machine tool is known from WO2016/094981 A1. The invention relates also to a method for machining according to the claim 8.

More in detail, the invention relates to a machine tool for performing machining operations, preferably drilling and/or milling operations, on panels made of wood or other material.

The description below relates to drilling and milling operations, but it is quite apparent how the same should not be considered limited to this specific use, as the machine tool according to the invention may also be applied for the performance of other types of machining operations.

There are several prior art machine tools for drilling panels equipped with systems for gripping and linear movement of the panels to be machined.

However, these machines have various technical limitations both in terms of flexibility in the use of the operating units and in terms of possible marks being made on the panel being machined on the gripping surfaces of the grippers of the gripping system.

In fact, the overall size of the grippers makes the positioning of the operating units in some zones of the machine adjacent to the panel problematic, limiting the relative flexibility of use.

Moreover, the grippers are configured in such a way as to grip the panel by friction on its upper and lower faces, with the consequent risk of causing permanent marks on its surface.

With this type of stopping and moving system there is also the possibility that, during the machining of the panel, it is necessary to change the gripping position in order to free the zones of the panel covered by the gripping system.

This operation, as well as increasing the machining times of the piece, can also limit the final precision of the machining.

There are also other types of machine tools for drilling panels comprising particular grippers equipped with long arms with small thicknesses, which block the panel to be machined by acting on the relative corners.

In this case, the locking occurs by means of contrasting corner elements, that is to say, in contact, acting on two right-angled sides of the panel, and, therefore, not by friction on the upper and lower faces of the panels.

However, this last solution of machine tool presented generally has significant overall dimensions.

Moreover, the constrain members provided, since they are angular in shape, cannot move with respect to the panel from the respective gripping position without detaching from the panel itself.

Therefore, in these cases, in order to allow the execution of machining operations in the corner zones of the panels, it is necessary to temporarily separate the corner constraining members from the panel and lock the latter by means of further constraining members until the completion of the machining operations planned in those zones.

In light of the above, the aim of the invention is therefore to provide a machine tool for machining panels equipped with a system for gripping and moving panels to be machined which allows a high flexibility of use in terms of possibility of movement of the operating means designed for machining the panel.

Another aim of the invention is to provide a machine tool for machining panels equipped with a system for gripping and moving panels to be machined which has reduced dimensions.

Another aim of the invention is to provide a machine tool for machining panels equipped with a system for gripping and moving panels to be machined which allows, during machining, modifying the gripping position on the panel without losing the reference of the panel in order to free the area occupied and allow the machining.

The specific object of this invention is therefore a machine tool for machining panels comprising: operating means for the performance of at least one machining operation on a panel lying on a predetermined surface defined by a first axis and a second axis, in said panel being defined a front border, a rear border opposite said front border, a first side border and a second side border opposite said first side border; a stopping and moving system for stopping and moving said panel on said predetermined surface, said stopping and moving system comprising: a first lateral contact element and a second lateral contact element movable according to said first axis and configured to make contact, in use, with, respectively, said first side border and said second side border causing the locking of said panel with respect to said first axis; a first front constraint member and a second front constraint member moveable according to said first axis and said second axis and configured to make contact, in use, with said front border causing a constraint to the movement of said panel in a first direction according to said second axis; and a first rear constraint member and a second rear constraint member movable according to said first axis and said second axis and configured to make contact, in use, with said rear border causing a constraint to the movement of said panel in a second direction according to said second axis opposite said first direction; wherein said first front constraint member, said second front constraint member, said first rear constraint member and said second rear constraint member are movable independently of said first lateral contact element and said second lateral contact element in such a way as to allow, in use, said operating means to operate on any zone of said front border, said rear border, said first side border and said second side border maintaining said first lateral contact element, said second lateral contact element, said first front constraint member, said second front constraint member, said first rear constraint member and said second rear constraint member in contact with said panel.

Preferably, according to the invention, said stopping and moving system comprises a first guide and a second guide which are movable according to said first axis, where said first front constraint member and first rear constraint member are connected with said first guide in a movable way according to said second axis, and where said second front constraint member and said second rear constraint member are connected with said second guide in a movable way according to said second axis.

Advantageously, according to the invention, said first guide and said second guide are substantially parallel to said second axis.

Further, according to the invention, said first lateral contact element can be connected with said first guide in a movable way according to said second axis, and said second lateral contact element can be connected with said second guide in a movable way according to said second axis.

Alternatively, according to the invention, said first lateral contact element can be rigidly connected with said first guide and said second lateral contact element can be rigidly connected with said second guide.

Moreover, according to the invention, said first lateral contact element and said second lateral contact element can have an oblong shape extending according to said first axis.

Conveniently, according to the invention, said first front constraint member, said second front constraint member, said first rear constraint member and said second rear constraint member can comprise a device which is movable according to said first axis.

Further, according to the invention, said device can comprise a contact element which is configured to come in contact, in use, with said panel, said contact element having an oblong shape and being movable according to said first axis and oriented substantially according to said second axis.

The specific object of this invention is also a method for machining, using a machine tool as indicated above, a panel having an upper face, a front border, a rear border opposite and parallel to said front border, a first side border and a second side border opposite and parallel to said first side border, wherein said first side border forms with said front border and said rear border, respectively, a first acute angle and a first obtuse angle and wherein said second side border forms with said front order and said rear border, respectively, a second obtuse angle and a second acute angle, said method comprising the following steps: placing said panel between said first lateral contact element, said second lateral contact element, said first front constraint member, said second front constraint member, said first rear constraint member and said second rear constraint member; detecting at least the position of said first side border or said second side border by, respectively, said first lateral contact element or said second lateral contact element; jointly moving said first front constraint member and said first rear constraint member or said second front constraint member and said second rear constraint member along said second axis in such a way that said first side border and said second side border are parallel to said second axis; and executing on said upper face at least one row of holes parallel to said second axis, wherein said holes are oriented according to a third axis at right angles to said first axis and said second axis, in such a way that said at least one row of holes is parallel to said first side border and to said second side border.

The invention is now described, by way of example and without limiting the scope of the invention, with reference to the accompanying drawings which illustrate preferred embodiments of it, in which:
- Figure 1 is an overall axonometric view of a machine tool according to a first embodiment of the invention;

Figure 2 is an axonometric view of the gripping system provided in the machine shown in Figure 1;
Figure 3 is an axonometric view of the gripping system of Figure 2, associated with a panel;
Figure 4 is a partial schematic top plan view of the machine tool shown in Figure 1;
Figure 5 is a partial schematic top plan view of the machine tool shown in Figures 1 and 4, associated with a panel with a squaring error, according to a first operating configuration;
Figure 6 is a partial schematic top plan view of the machine tool shown in Figures 1, 4 and 5, associated with a panel with a squaring error, according to a second operating configuration;
Figure 7 is a partial schematic top plan view of a machine tool according to a second embodiment of the invention; and
Figure 8 is a partial schematic top plan view of the machine tool shown in Figure 7, in a second operating step.

The similar parts will be indicated in the various drawings with the same numerical references.

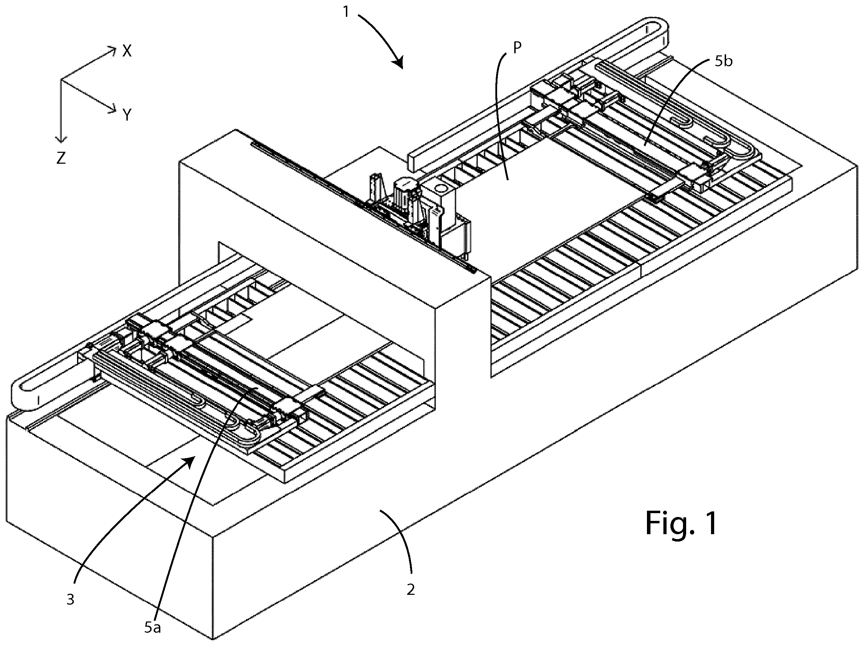

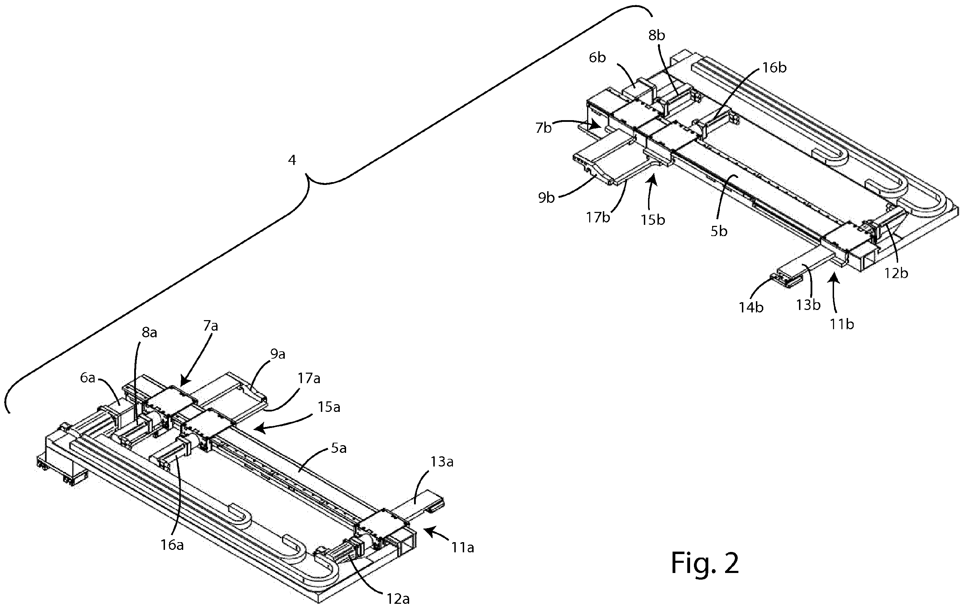

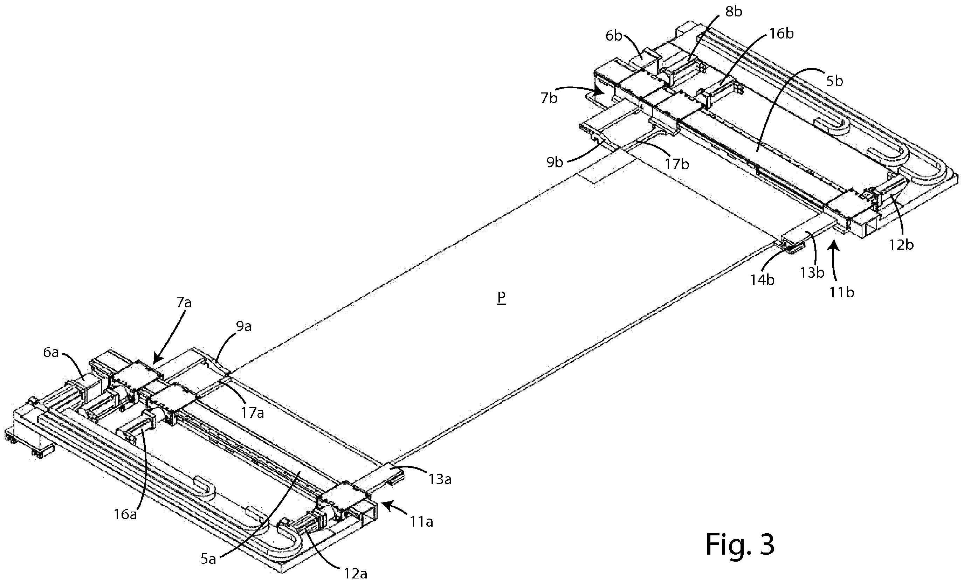

With reference to Figures 1 to 6, the numeral 1 indicates a first machine tool for machining panels according to a first embodiment of the invention.

The machine tool 1 comprises a base 2 above which is provided a working surface 3 lying, substantially, on a horizontal surface defined by a first axis X and a second axis Y at right angles to said first axis X.

On the work surface 3 there is a stopping and moving system 4 to allow the stopping and moving of the panels on the above-mentioned horizontal surface during the execution of the machining operations planned on the latter.

The stopping and moving system 4 in turn comprises a first linear guide 5a and a second linear guide 5b parallel to each other and both oriented according to the above-mentioned second axis Y.

Both the first linear guide 5a and the second linear guide 5b are movable along said first axis X independently from each other thanks, respectively, to a first motor 6a and a second motor 6b.

The same stopping and moving system 4 also comprises a first front constraint member 7a enabled to move along the first linear guide 5a thanks to a third motor 8a, and a second front constraint member 7b enabled to move along the second linear guide 5b thanks to a fourth motor 8b.

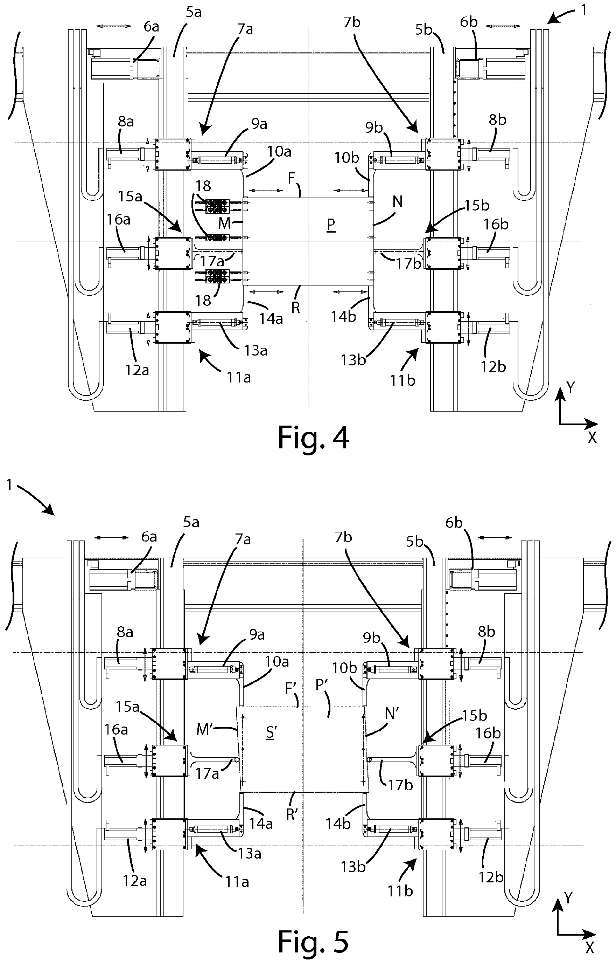

The first front constraint member 7a and the second front constraint member 7b comprise, respectively, a first telescopic device 9a and a second telescopic device 9b which are both movable according to the first axis X and are equipped, respectively, with a first front contact end element 10a and a second front contact end element 10b (see Figure 4) oriented according to the above-mentioned second axis Y and designed to come into contact, in use, with the front border F of the panel P.

The stopping and moving system 4 also includes a first rear constraint member 11a enabled to move along the first linear guide 5a thanks to a fifth motor 12a, and a second rear constraint member 11b enabled to move along the second linear guide 5b thanks to a sixth motor 12b.

The first rear constraint member 11a and the second rear constraint member 11b comprise, respectively, a third telescopic device 13a and a fourth telescopic device 13b, both movable according to the first axis X.

The third telescopic device 13a and the fourth telescopic device 13b are also equipped, respectively, with a first rear contact end element 14a and a second rear contact end element 14b oriented according to the above-mentioned axis Y and designed to come into contact, in use, with the rear border R of the panel P.

The stopping and moving system 4 also includes a first lateral constraint member 15a enabled to move along the first linear guide 5a thanks to a seventh motor 16a, and a second lateral constraint member 15b enabled to move along the second linear guide 5b thanks to a sixth motor 16b.

The first lateral constraint element 15a and the second lateral constraint element 15b are respectively equipped with a first lateral contact element 17a and a second lateral contact element 17b which are both oriented along the first axis X and designed to make contact, in use, with, respectively, a first side border M of the panel and a second side border N of the same panel P, opposite said first side border M.

In the first machine tool 1 there is also an operating head 18, that is to say, an operating device movable with respect to the work surface 3 and designed to execute one or more machining operations, such as, for example, drilling operations, on the panel P.

The same machine tool 1 can also comprise, even though not shown in Figures 1-6, other operational devices for performing further machining operations on the panel P.

In order to allow the execution of the machining operations planned on the panel P, the latter is placed in a zone of the working surface 3 between the first front constraint member 7a, the second front constraint member 7b, the first rear constraint member 11a, the second rear constraint member 11b, the first lateral constraint member 15a and the second lateral constraint member 15b, as shown in Figure 4.

Subsequently, the same panel P is locked by moving the first front constraint member 7a and the second front constraint member 7b in contact with the front border F, the first rear constraint member 11a and the second rear constraint member 11b in contact with the rear border R, and the first lateral constraint member 15a and the second lateral constraint member 15b in contact, respectively, with the first side border M and the second side border N of the panel P.

When the above-mentioned members 7a, 7b, 11a, 11b, 15a, 15b are all in contact with the panel P, the latter is locked both with respect to the first axis X and with respect to the second axis Y, in this way allowing the execution of the machining operations in perfectly stable conditions.

Then moving in a synchronous fashion along the first axis X the first linear guide 5a and the second linear guide 5b and, simultaneously, moving in a synchronous fashion along the second axis Y the first 7a and the second front constraint member 7b and the first 11a and the second rear constraint member 11b it is possible to modify the position of the panel P in the above-mentioned horizontal plane maintaining the relative reference in space in order to execute further machining operations on the panel P.

Moreover, if it is necessary to execute a hole or any other machining operation precisely at the zone of contact of the first lateral contact element 17a or of the second lateral contact element 17b with the panel P, it is possible to move, as necessary, the first lateral constraint member 15a or the second lateral constraint member 15b along the second axis Y to leave the machining area free or, alternatively, move the panel P along the second axis Y moving, in an integral fashion, the first lateral contact element 7a, the second lateral contact element 7b, the first rear constraint member 11a and the second rear constraint member 11b along the second axis Y.

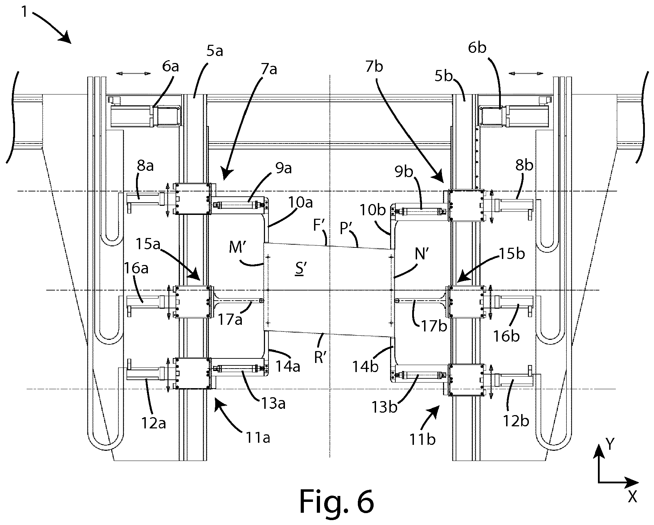

Figures 5 and 6 show, on the other hand, a particular functionality of the same machine tool 1, which can be actuated in the case of machining operations on panels with a squaring error P', that is to say, panels with sides which are not perfectly at right angles to each other and opposite sides parallel.

If it is necessary to execute, using drilling devices, on the upper face S' of the panel P', a row of structural holes lying parallel to the second axis Y, wherein said structural holes are parallel to a third axis Z at right angles to said first X and second axis Y, it is important, for the purposes of the subsequent coupling of the panel P' with components, that the row of holes formed in this way is parallel to the first side border M' and to the second side border N' of the panel P'.

Before proceeding with the above-mentioned drilling operations, it is necessary to orient the side borders M', N' parallel to the second axis Y.

For this purpose, use is made of the first lateral contact element 17a of the first lateral constraint member 15a and/or the second lateral contact element 17b of the second lateral constraint member 15b to make contact with the first side border M' and/or the second side border N' in order to detect the exact position.

Once the position of the first M' and/or of the second side border N' has been detected and therefore also the relative squaring error with respect to the front border F' and rear border R' of the panel P', the first front constraint member 7a and the first rear constraint member 11a are translated, in an integral fashion, along the second axis Y and/or the second front constraint member 7b and the second rear constraint member 11b are translated, in an integral fashion, again along the second axis Y in such a way that the panel P' rotates by an angle such as to allow the relative side borders M', N' to orient parallel to the second axis Y (see Figure 6).

At this point, the panel P' is in a position suitable for the execution of the above-mentioned structural holes.

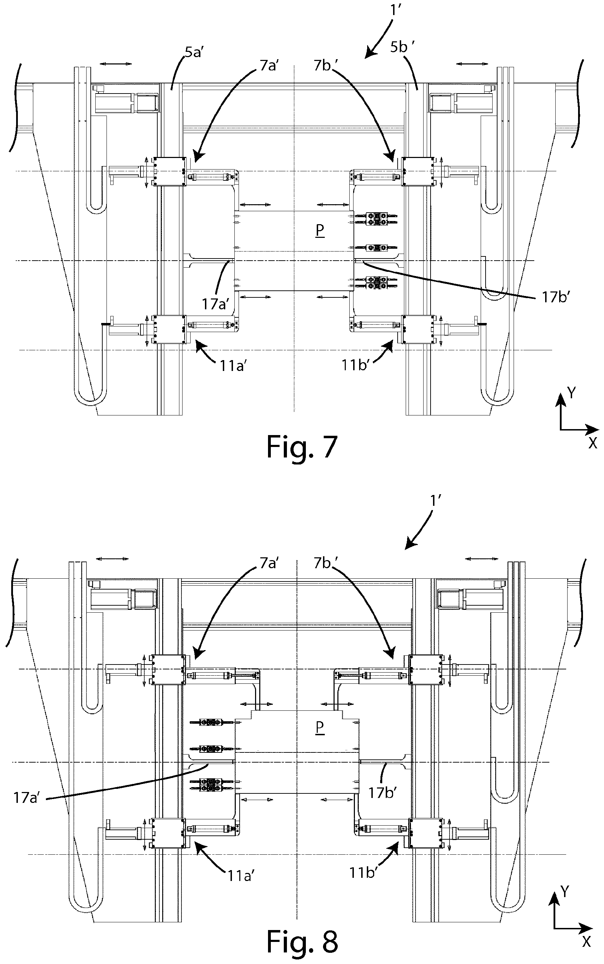

Figures 7 and 8 show, on the other hand, a second tool machine 1' according to the invention, which is identical to the first tool machine 1 described above with the exception of the fact that the first lateral contact element 17a' and the second lateral contact element 17b' are in this case rigidly connected, respectively, to the first linear guide 5a' and to the second linear guide 5b', without being able to move along the second axis Y.

The second machine tool 1' therefore represents, in fact, a simplified version of the first machine tool 1.

With reference to the second machine tool 1', if it is necessary to execute a hole or any other machining operation precisely at the zone of contact of the first lateral contact element 17a' or of the second lateral contact element 17b' with the panel P, it is possible to move the panel P along the second axis Y moving, in an integral fashion, the first lateral contact element 7a', the second lateral contact element 7b', the first rear constraint member 11a' and the second rear constraint member 11b' along the second axis Y to leave the machining area free.

Moreover, if there is the need to remove a corner portion of the panel P by milling, or to perform any other machining operation which affects the zone of the panel P occupied by the front constraint members, it is sufficient to lengthen the front constraint member 7a', 7b' or rear constrain member 11a', 11b' occupying the machining zone of the panel P, in such a way as to leave said zone free (see Figure 8).

Clearly, this latter functionality is also present in the first machine tool 1.

As may be seen from the above description, the machine tool according to the invention has a high degree of flexibility of use, at the same time allowing the performance of high precision machining operations.

## Claims

1. A machine tool (1, 1') for machining panels comprising:
- operative means (18) for performing at least one operation on a panel (P, P') lying on a predetermined surface which is defined by a first axis (X) and a second axis (Y), in said panel (P, P') being provided a front border (F, F'), a rear border (P, P') which is opposite to said front border (F, F'), a first side border (M, M') and a second side border (N, N') which is opposite to said first side border (M, M');
- a stopping and moving system (4) for stopping and moving said panel (P, P') on said predetermined surface, where said stopping and moving system (4) comprises:
• a first lateral contact element (17a, 17a') and a second lateral contact element (17b, 17b') which are movable along said first axis (X) and configured to make contact, in use, respectively with said first side border (M, M') and said second side border (N, N'), causing the locking of said panel (P, P') with respect to said first axis (X);
• a first front constraint member (7a, 7a') and a second front constraint member (7b, 7b') which are movable according to said first axis (X) and said second axis (Y) by a respective motor (8a, 8b) and configured to make contact, in use, with said front border (F, F') causing a constraint to the movement of said panel (P, P') in a first direction according to said second axis (Y); and
• a first rear constraint member (11a, 11a') and a second rear constraint member (11b, 11b') which are movable according to said first axis (X) and said second axis (Y) by a respective motor (12a, 12b) and configured to make contact, in use, with said rear border (P, P') causing a constraint to the movement of said panel (P, P') in a second direction according to said second axis (Y) opposite said first direction;
where said first front constraint member (7a, 7a'), said second front constraint member (7b, 7b'), said first rear constraint member (11a, 11a') and said second rear constraint member (11b, 11b') are movable independently of each other and of said first lateral contact element (17a, 17a') and said second lateral contact element (17b, 17b') such as to allow, when in use, said operative means (18) to operate on any region of said front border (F, F'), said rear border (R, R'), said first side border (M, M') and said second side border (N, N') while keeping said first lateral contact element (17a, 17a'), said second lateral contact element (17b, 17b'), said first front constraint member (7a, 7a'), said second front constraint member (7b, 7b'), said first rear constraint member (11a, 11a') and said second rear constraint member (11b, 11b') in contact with said panel (P, P');
**characterised in that** said stopping and moving system (4) comprises a first guide (5a, 5a') and a second guide (5b, 5b') which are movable according to said first axis (X), where said first front constraint member (7a, 7a') and first rear constraint member (11a, 11a') are connected with said first guide (5a, 5a') in a movable way according to said second axis (Y), and where said second front constraint member (7b, 7b') and said second rear constraint member (11b, 11b') are connected with said second guide (5b, 5b') in a movable way according to said second axis (Y).

2. The machine tool (1, 1') according to the preceding claim, **characterised in that** said first guide (5a, 5a') and said second guide (5b, 5b') are substantially parallel to said second axis (Y).

3. The machine tool (1) according to anyone of the preceding claims, **characterised in that** said first lateral contact element (17a) is connected with said first guide (5a) in a movable way according to said second axis (Y), and said second lateral contact element (17b) is connected with said second guide (5b) in a movable way according to said second axis (Y).

4. The machine tool (1') according to any one of the preceding claims, **characterised in that** said first lateral contact element (17a') is rigidly connected with said first guide (5a'), and said second lateral contact element (17b') is rigidly connected with said second guide (5b').

5. The machine tool (1, 1') according to any one of the preceding claims, **characterised in that** said first lateral contact element (17a, 17a') and said second lateral contact element (17b, 17b') have an oblong shape extending according to said first axis (X).

6. The machine tool (1, 1') according to any one of the preceding claims, **characterised in that** said first front constraint member (7a, 7a'), said second front constraint member (7b, 7b'), said first rear constraint member (11a, 11a') and said second rear constraint member (11b, 11b') comprise a device (9a, 9b, 13a, 13b) which is movable according to said first axis (X).

7. The machine tool (1, 1') according to the preceding claim, **characterised in that** said device (9a, 9b, 13a, 13b) comprises a contact element (10a, 10b, 14a, 14b) which is configured to come in contact, in use, with said panel (P, P'), said contact element (10a, 10b, 14a, 14b) having an oblong shape and being movable according to said first axis (X) and oriented substantially according to said second axis (Y).

8. A method for machining, by a machine tool (1) according to any one of claims 1 to 3 and 5 to 7, a panel (P') having an upper face (S'), a front border (F'), a rear border (R') which is opposite and parallel to said front border (F'), a first side border (M') and a second side border (N') which is opposite and parallel to said first side border (M'), where said first side border (M') forms with said front border (F') and said rear border (R'), respectively, a first acute angle and a first obtuse angle, and where said second side border (N') forms with said front border (F') and said rear border (R'), respectively, a second obtuse angle and a second acute angle, said method comprising steps of:
- placing said panel (P') between said first lateral contact element (17a), said second lateral contact element (17b), said first front constraint member (7a), said second front constraint member (7b), said first rear constraint member (11a) and said second rear constraint member (11b);
- detecting at least the position of said first side border (M') or said second side border (N') by, respectively, said first lateral contact element (17a) or said second lateral contact element (17b);
- jointly moving said first front constraint member (7a) and said first rear constraint member (11a), or said second front constraint member (7b) and said second rear constraint member (11b) along said second axis (Y) such that said first side border (M') and said second side border (N') arrange themselves parallel to said second axis (Y); and
- forming on said upper face (S'), at least one row of holes which is parallel to said second axis (Y), where said holes are oriented according to a third axis (Z) which is orthogonal to said first axis (X) and said second axis (Y), such that said at least one row of holes is parallel to said first side border (M') and said second side border (N').

## Patentansprüche

1. Werkzeugmaschine (1, 1') zur Bearbeitung von Platten, bestehend aus:
- Betriebsmittel (18) zur Durchführung mindestens eines Vorgangs an einem Paneel (P, P'), das auf einer bestimmten Fläche liegt, die durch eine erste Achse (X) und eine zweite Achse (Y) definiert ist, wobei in diesem Paneel (P, P') eine vordere Begrenzung (F, F') und eine hintere Begrenzung vorgesehen ist (P, P'), die gegenüber der vorderen Grenze (F, F') liegt, eine erste seitliche Grenze (M, M') und eine zweite seitliche Grenze (N, N'), die gegenüber der ersten seitlichen Grenze (M, M') liegt;
- ein Stopp- und Bewegungssystem (4) zum Anhalten und Bewegen des Blechs (P, P') auf der vorbestimmten Fläche, wobei das Stopp- und Bewegungssystem (4) Folgendes umfasst:
• ein erstes seitliches Kontaktelement (17a, 17a') und ein zweites seitliches Kontaktelement (17b, 17b'), die entlang der ersten Achse (X) beweglich und so konfiguriert sind, dass sie in Gebrauch sind, jeweils mit der ersten Seitenkante (M, M') und der zweiten Seitenkante (N, N') in Berührung kommen, das Verriegeln des Blechs (P, P') in Bezug auf die erste Achse (X) bewirkt;
• ein erstes vorderes Zwangselement (7a, 7a') und ein zweites vorderes Zwangselement (7b, 7b'), die gemäß der ersten Achse (X) und der zweiten Achse (Y) durch einen entsprechenden Motor (8a, 8b) beweglich sind und so konfiguriert sind, dass sie den vorderen Rand berühren (F, F'), die eine Einschränkung der Bewegung des Panels (P, P') in eine erste Richtung gemäß der zweiten Achse (Y) verursachen, und
• einem ersten hinteren Begrenzungselement (11a, 11a') und einem zweiten hinteren Begrenzungselement (11b, 11 b'), die gemäß der ersten Achse (X) und der zweiten Achse (Y) durch einen entsprechenden Motor (12a, 12b) beweglich sind und so konfiguriert sind, dass sie den hinteren Rand berühren (P, P'), die eine Einschränkung der Bewegung des Panels (P, P') in eine zweite Richtung gemäß der zweiten Achse (Y) gegenüber der ersten Richtung bewirkt; dabei sind das erste vordere Zugriffselement (7a, 7a'), das zweite vordere Zugriffselement (7b, 7b'), das erste hintere Zugriffselement (11a, 11a') und das zweite hintere Zugriffselement (11b, 11b') unabhängig voneinander und vom ersten seitlichen Kontaktelement (17a, 17a') beweglich, und das zweite seitliche Kontaktelement (17b, 17b'), das es ermöglicht, bei Gebrauch die Betriebsmittel (18) in jedem Bereich der vorderen Grenze (F, F'), der hinteren Grenze (R, R'), der ersten Seitengrenze (M, M') und der zweiten Seitengrenze (N, N') zu betätigen. während das erste seitliche Kontaktelement (17a, 17a'), das zweite seitliche Kontaktelement (17b, 17b'), das erste vordere Begrenzungselement (7a, 7a'), das zweite vordere Begrenzungselement (7b, 7b'), das erste hintere Begrenzungselement (11a, 11a') und das zweite hintere Begrenzungselement (11b, 11b') mit dem Blech in Kontakt bleiben (P, P'); **dadurch gekennzeichnet, dass** das Stopp- und Bewegungssystem (4) eine erste Führung (5a, 5a') und eine zweite Führung (5b, 5b') umfasst, die nach der ersten Achse (X) beweglich sind, wobei das erste vordere Zwangselement (7a, 7a') und das erste hintere Zwangselement (11a, 11a') mit der ersten Führung (5a, 5a') in beweglicher Weise gemäß der zweiten Achse (Y) verbunden sind, und wobei das zweite vordere Zugelement (7b, 7b') und das zweite hintere Zugelement (11b, 11b') mit der zweiten Führung (5b, 5b') in beweglicher Weise gemäß der zweiten Achse (Y) verbunden sind.

2. Werkzeugmaschine (1, 1') nach dem vorhergehenden Anspruch, **dadurch gekennzeichnet, dass** die erste Führung (5a, 5a') und die zweite Führung (5b, 5b') im Wesentlichen parallel zur zweiten Achse (Y) sind.

3. Werkzeugmaschine (1) nach einem der vorhergehenden Ansprüche, **dadurch gekennzeichnet, dass** das erste seitliche Kontaktelement (17a) mit der ersten Führung (5a) beweglich gemäß der zweiten Achse (Y) verbunden ist, und das zweite seitliche Kontaktelement (17b) ist mit der zweiten Führung (5b) beweglich gemäß der zweiten Achse (Y) verbunden.

4. Werkzeugmaschine (1') nach einem der vorangehenden Ansprüche, **dadurch gekennzeichnet, dass** das erste seitliche Kontaktelement (17a') mit der ersten Führung (5a') starr verbunden ist und das zweite seitliche Kontaktelement (17b') starr mit der zweiten Führung (5b') verbunden ist.

5. Werkzeugmaschine (1, 1') nach einem der vorhergehenden Ansprüche, **dadurch gekennzeichnet, dass** das erste seitliche Kontaktelement (17a, 17a') und das zweite seitliche Kontaktelement (17b, 17b') eine länglich ausgerichtete Form aufweisen, die sich nach der ersten Achse (X) erstreckt.

6. Werkzeugmaschine (1, 1') nach einem der vorhergehenden Ansprüche, **dadurch gekennzeichnet, dass** das erste vordere Zwangselement (7a, 7a'), das zweite vordere Zwangselement (7b, 7b'), das erste hintere Zwangselement (11a, 11a') und das zweite hintere Zwangselement (11b, 11b') eine Vorrichtung (9a, 9b, 13a, 13b) aufweisen, die nach der ersten Achse (X) beweglich ist.

7. Werkzeugmaschine (1, 1') nach dem vorhergehenden Anspruch, **dadurch gekennzeichnet, dass** die Vorrichtung (9a, 9b, 13a, 13b) ein Kontaktelement (10a, 10b, 14a, 14b) aufweist, das so konfiguriert ist, dass es mit dem Panel (P, P') in Berührung kommt, das Kontaktelement (10a, 10b, 14a, 14b) mit einer länglichen Form, die nach der ersten Achse (X) beweglich und im Wesentlichen nach der zweiten Achse (Y) ausgerichtet ist.

8. Verfahren zur Bearbeitung durch eine Werkzeugmaschine (1) nach einem der Ansprüche 1 bis 3 und 5 bis 7 einer Platte (P') mit einer Oberseite (S'), einer vorderen Begrenzung (F') und einer hinteren Begrenzung (R'), die gegenüber und parallel zur vorderen Begrenzung (F') verläuft, eine erste Seitenbegrenzung (M') und eine zweite Seitenbegrenzung (N'), die gegenüber und parallel zur ersten Seitenbegrenzung (M') verläuft, wobei die erste Seitenbegrenzung (M') mit der vorderen Begrenzung (F') bzw. der hinteren Begrenzung (R') jeweils einen ersten spitzen Winkel und einen ersten stumpfen Winkel bildet; und wenn die zweite Seitengrenze (N') mit der vorderen Grenze (F') und der hinteren Grenze (R') jeweils einen zweiten stumpfen Winkel und einen zweiten spitzen Winkel bildet, so umfasst das Verfahren folgende Schritte:
- das Blech (P') zwischen dem ersten seitlichen Kontaktelement (17a), dem zweiten seitlichen Kontaktelement (17b), dem ersten vorderen Begrenzungselement (7a), dem zweiten vorderen Begrenzungselement (7b), dem ersten hinteren Begrenzungselement (11a) und dem zweiten hinteren Begrenzungselement (11b) platzieren;
- zumindest die Position der ersten Seitenbegrenzung (M') oder der zweiten Seitenbegrenzung (N') durch das erste seitliche Kontaktelement (17a) bzw. das zweite seitliche Kontaktelement (17b) zu erkennen;
- das erste vordere Zugriffselement (7a) und das erste hintere Zugriffselement (11a) gemeinsam bewegen, oder das zweite vordere Begrenzungselement (7b) und das zweite hintere Begrenzungselement (11b) entlang der zweiten Achse (Y), so dass die erste Seitenbegrenzung (M') und die zweite Seitenbegrenzung (N') parallel zur zweiten Achse (Y) angeordnet sind; und
- auf der oberen Fläche (S') mindestens eine Reihe von Bohrungen bilden, die parallel zu der zweiten Achse (Y) verläuft, wobei diese Bohrungen nach einer dritten Achse (Z) ausgerichtet sind, die orthogonal zu der ersten Achse (X) und der zweiten Achse (Y) ist; so ist mindestens eine Reihe von Löchern parallel zu der ersten Seitenbegrenzung (M') und der zweiten Seitenbegrenzung (N').

## Revendications

1. Une machine-outil (1, 1') pour l'usinage de panneaux comprenant:
- des moyens opérationnels (18) pour effectuer au moins une opération sur un panneau (P, P') reposant sur une surface prédéterminée définie par un premier axe (X) et un deuxième axe (Y), ledit panneau (P, P') étant pourvu d'une bordure avant (F, F'), d'une bordure arrière (P, P') opposé à ladite bordure avant (F, F'), d'une première bordure latérale (M, M') et d'une deuxième bordure latérale (N, N') opposé à ladite première bordure latérale (M, M');
- un système d'arrêt et de déplacement (4) pour arrêter et déplacer ledit panneau (P, P') sur ladite surface prédéterminée, où ledit système d'arrêt et de déplacement (4) comprend:
• un premier élément de contact latéral (17a, 17a') et un deuxième élément de contact latéral (17b, 17b') mobiles le long dudit premier axe (X) et configurés pour entrer en contact, en utilisation, respectivement avec ladite première bordure latérale (M, M') et ladite deuxième bordure latérale (N, N'), provoquant le blocage dudit panneau (P, P') par rapport audit premier axe (X);
• un premier élément de contrainte avant (7a, 7a') et un deuxième élément de contrainte avant (7b, 7b') mobiles selon ledit premier axe (X) et ledit deuxième axe (Y) par un moteur respectif (8a, 8b) et configurés pour entrer en contact, en cours d'utilisation, avec ladite bordure avant (F, F') causant une contrainte au mouvement dudit panneau (P, P') dans une première direction selon ledit deuxième axe (Y); et
• un premier élément de contrainte arrière (11a, 11a') et un deuxième élément de contrainte arrière (11b, 11 b') mobiles selon ledit premier axe (X) et ledit deuxième axe (Y) par un moteur respectif (12a, 12b) et configurés pour entrer en contact, en utilisation, avec ladite bordure arrière (P, P') en provoquant une contrainte au mouvement dudit panneau (P, P') dans une deuxième direction selon ledit deuxième axe (Y) opposé à ladite première direction; où ledit premier élément de contrainte avant (7a, 7a'), ledit deuxième élément de contrainte avant (7b, 7b'), ledit premier élément de contrainte arrière (11a, 11a') et ledit deuxième élément de contrainte arrière (11b, 11b') sont mobiles indépendamment les uns des autres et dudit premier élément de contact latéral (17a, 17a') et dudit deuxième élément de contact latéral (17b, 17b') de manière à permettre, lors de l'utilisation, auxdits moyens opérationnels (18) d'agir sur n'importe quelle région de ladite bordure avant (F, F'), de ladite bordure arrière (R, R'), de ladite première bordure latérale (M, M') et de ladite deuxième bordure latérale (N, N') tout en conservant ledit premier élément de contact latéral (17a, 17a'), ledit deuxième élément de contact latéral (17b, 17b'), ledit premier élément de contrainte avant (7a, 7a'), ledit deuxième élément de contrainte avant (7b, 7b'), ledit premier élément de contrainte arrière (11a, 11a') et ledit deuxième élément de contrainte arrière (11b, 11b') en contact avec ledit panneau (P, P'); **caractérisé en ce que** ledit système d'arrêt et de déplacement (4) comprend un premier guide (5a, 5a') et un deuxième guide (5b, 5b') qui sont mobiles selon ledit premier axe (X), où ledit premier élément de contrainte avant (7a, 7a') et ledit premier élément de contrainte arrière (11a, 11a') sont reliés audit premier guide (5a, 5a') de manière mobile selon ledit deuxième axe (Y), et où ledit deuxième élément de contrainte avant (7b, 7b') et ledit deuxième élément de contrainte arrière (11b, 11b') sont reliés audit deuxième guide (5b, 5b') de manière mobile selon ledit deuxième axe (Y).

2. Machine-outil (1, 1') selon la revendication précédente, **caractérisée en ce que** ledit premier guide (5a, 5a') et ledit deuxième guide (5b, 5b') sont sensiblement parallèles audit deuxième axe (Y).

3. Machine-outil (1) selon l'une quelconque des revendications précédentes, **caractérisée en ce que** ledit premier élément de contact latéral (17a) est relié audit premier guide (5a) de manière mobile selon ledit deuxième axe (Y), et ledit deuxième élément de contact latéral (17b) est relié audit deuxième guide (5b) de manière mobile selon ledit deuxième axe (Y).

4. Machine-outil (1') selon l'une quelconque des revendications précédentes, **caractérisée en ce que** ledit premier élément de contact latéral (17a') est relié rigidement audit premier guide (5a'), et ledit deuxième élément de contact latéral (17b') est relié rigidement audit deuxième guide (5b').

5. Machine-outil (1, 1') selon l'une quelconque des revendications précédentes, **caractérisée en ce que** ledit premier élément de contact latéral (17a, 17a') et ledit deuxième élément de contact latéral (17b, 17b') ont une forme oblongue s'étendant selon ledit premier axe (X).

6. Machine-outil (1, 1') selon l'une quelconque des revendications précédentes, **caractérisée en ce que** ledit premier élément de contrainte avant (7a, 7a'), ledit deuxième élément de contrainte avant (7b, 7b'), ledit premier élément de contrainte arrière (11a, 11a') et ledit deuxième élément de contrainte arrière (11b, 11b') comprennent un dispositif (9a, 9b, 13a, 13b) mobile selon ledit premier axe (X).

7. Machine-outil (1, 1') selon la revendication précédente, **caractérisée en ce que** ledit dispositif (9a, 9b, 13a, 13b) comprend un élément de contact (10a, 10b, 14a, 14b) configuré pour entrer en contact, en utilisation, avec ledit panneau (P, P'), ledit élément de contact (10a, 10b, 14a, 14b) ayant une forme oblongue et étant mobile selon ledit premier axe (X) et orienté sensiblement selon ledit deuxième axe (Y).

8. Procédé d'usinage, par une machine-outil (1) selon l'une quelconque des revendications 1 à 3 et 5 à 7, d'un panneau (P') ayant une face supérieure (S'), une bordure avant (F'), une bordure arrière (R') opposée et parallèle à ladite bordure avant (F'), une première borure latérale (M') et une deuxième bordure latérale (N') opposée et parallèle à ladite première bordure latérale (M'), où ladite première bordure latérale (M') forme avec ladite bordure avant (F') et ladite bordure arrière (R'), respectivement, un premier angle aigu et un premier angle obtus, et où ladite deuxième bordure latérale (N') forme avec ladite bordure avant (F') et ladite bordure arrière (R'), respectivement, un deuxième angle obtus et un deuxième angle aigu, ledit procédé comprenant les étapes suivantes:
- placer ledit panneau (P') entre ledit premier élément de contact latéral (17a), ledit deuxième élément de contact latéral (17b), ledit premier élément de contrainte avant (7a), ledit deuxième élément de contrainte avant (7b), ledit premier élément de contrainte arrière (11a) et ledit deuxième élément de contrainte arrière (11b);
- détecter au moins la position de ladite première bordure latérale (M') ou de ladite deuxième bordure latérale (N') par, respectivement, ledit premier élément de contact latéral (17a) ou ledit deuxième élément de contact latéral (17b);
- déplacer conjointement ledit premier élément de contrainte avant (7a) et ledit premier élément de contrainte arrière (11a), ou ledit deuxième élément de contrainte avant (7b) et ledit deuxième élément de contrainte arrière (11b) le long dudit deuxième axe (Y) de sorte que ladite première bordure latérale (M') et ladite deuxième bordure latérale (N') soient disposés parallèlement audit deuxième axe (Y); et
- former sur ladite face supérieure (S'), au moins une rangée de trous qui est parallèle audit deuxième axe (Y), où lesdits trous sont orientés selon un troisième axe (Z) qui est orthogonal audit premier axe (X) et audit deuxième axe (Y), de telle sorte que ladite au moins une rangée de trous est parallèle à ladite première bordure latérale (M') et à ladite deuxième bordure latérale (N').
